(19) **Europäisches Patentamt**
**European Patent Office**
**Office européen des brevets**

(11) **EP 4 672 703 A1**

(12) **EUROPEAN PATENT APPLICATION**

(43) Date of publication:
**31.12.2025 Bulletin 2026/01**

(21) Application number: **24216556.1**

(22) Date of filing: **29.11.2024**

(51) International Patent Classification (IPC):
*H04L 45/02* (2022.01)    *H04L 43/026* (2022.01)
*H04L 45/00* (2022.01)    *H04L 47/24* (2022.01)
*H04L 47/2441* (2022.01)    *H04L 47/2483* (2022.01)

(52) Cooperative Patent Classification (CPC):
**H04L 45/02; H04L 43/026; H04L 45/38;**
**H04L 47/24; H04L 47/2441; H04L 47/2483**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.06.2024 CN 202410864610**

(71) Applicant: **New H3C Technologies Co., Ltd.**
**Hangzhou, Zhejiang 310052 (CN)**

(72) Inventor: **ZHAO, Haifeng**
**Beijing, 100102 (CN)**

(74) Representative: **2SPL Patentanwälte PartG mbB**
**Landaubogen 3**
**81373 München (DE)**

(54) **TRAFFIC FORWARDING METHOD AND APPARATUS**

(57)     Disclosed are a traffic forwarding method and apparatus. In an example of the present disclosure, a forwarding engine may report flow statistics information to a processor in response to a determination that an information reporting condition is met. Among flow statistics information with the same flow identification information, the processor may merge the flow statistics information meeting a preset interval duration merging condition based on the first packet timestamp and the last packet timestamp. The processor determines cycle information of a flow based on the merged flow statistics information, determine flow characteristic information of a downstream port of a spine node based on the cycle information of the flow, and advertise the flow characteristic information of the downstream port of the spine node to leaf nodes, so that the leaf nodes perform upstream data flow scheduling based on the flow characteristic information of the downstream port of the spine node.

a forwarding engine reports flow statistics information to a processor when it determines that conditions for information reporting are met; for any piece of flow statistics information reported by the forwarding engine, the flow statistics information includes flow identification information, a first packet timestamp, a last packet timestamp, and packet byte count — 101

among flow statistics information with the same flow identification information, the processor merges the flow statistics information meeting a preset interval duration merging condition based on the first packet timestamp and the last packet timestamp — 102

cycle information of a flow is determined based on the merged flow statistics information; the cycle information of the flow includes cycle duration of the flow, traffic interval duration between adjacent cycles, and traffic rate within the cycle — 103

flow characteristic information of a downstream port of a spine node is determined based on the cycle information of the flow, and the flow characteristic information of the downstream port of the spine node is advertised to leaf nodes, so that the leaf nodes perform upstream data flow scheduling based on the flow characteristic information of the downstream port of the spine node; wherein the flow characteristic information includes flow creation time and the cycle information of the flow — 104

FIG. 1

**Description**

**TECHNICAL FIELD**

The present disclosure relates to the field of AI (Artificial Intelligence) large models and network communication technologies, particularly to a traffic forwarding method and apparatus.

**BACKGROUND**

An AI large model network refers to the computing and communication infrastructure that supports the training and operation of large artificial intelligence models.

The AI large model network is characterized by periodic fluctuations in traffic and large data traffic volumes. Therefore, traffic collisions are prone to occur in actual networking scenarios.

For example, when multiple computing nodes simultaneously send traffic to computing nodes under the same Leaf node, traffic collisions are likely to occur at the downstream port of the Spine node connecting to that Leaf node, leading to traffic congestion.

How to reduce the probability of traffic congestion in AI large model networks has become a technical problem that needs to be solved urgently.

**SUMMARY**

The present disclosure provides a traffic forwarding method and apparatus to address the issue of traffic congestion that is prone to occur in existing AI large model networks.

According to a first aspect of embodiments of the present disclosure, a traffic forwarding method is provided, including:

reporting, by a forwarding engine, flow statistics information to a processor in response to a determination that an information reporting condition is met; where for any piece of flow statistics information reported by the forwarding engine, the flow statistics information includes flow identification information, a first packet timestamp, a last packet timestamp, and a packet byte count;

among flow statistics information with the same flow identification information, merging, by the processor, the flow statistics information meeting a preset interval duration merging condition based on the first packet timestamp and the last packet timestamp;

determining, by the processor, cycle information of a flow based on the merged flow statistics information; where the cycle information of the flow includes cycle duration of the flow, traffic interval duration between adjacent cycles, and traffic rate within the cycle;

determining, by the processor, flow characteristic information of a downstream port of a spine node based on the cycle information of the flow, and advertising the flow characteristic information of the downstream port of the spine node to leaf nodes, so that the leaf nodes perform upstream data flow scheduling based on the flow characteristic information of the downstream port of the spine node; where the flow characteristic information includes flow creation time and the cycle information of the flow.

According to a second aspect of embodiments of the present disclosure, a traffic forwarding apparatus is provided, comprising: a processor and a forwarding engine; wherein:

the forwarding engine is used to, in response to a determination that an information reporting condition is met, report flow statistics information to the processor; where for any piece of flow statistics information reported by the forwarding engine, the flow statistics information includes flow identification information, a first packet timestamp, a last packet timestamp, and packet byte count;

the processor is used to, among flow statistics information with the same flow identification information, merge the flow statistics information meeting a preset interval duration merging condition based on the first packet timestamp and the last packet timestamp;

the processor is further used to determine cycle information of a flow based on the merged flow statistics information; where the cycle information of the flow includes cycle duration of the flow, traffic interval duration between adjacent cycles, and traffic rate within the cycle;

the processor is further used to determine flow characteristic information of a downstream port of a spine node based on the cycle information of the flow, and advertise the flow characteristic information of the downstream port of the spine node to leaf nodes, so that the leaf nodes perform upstream data flow scheduling based on the flow characteristic information of the downstream port of the spine node; where the flow characteristic information includes flow creation time and the cycle information of the flow.

By applying the technical solution disclosed in the present disclosure, a forwarding engine reports flow statistics information to a processor in response to a determination that an information reporting conditions is met; among flow statistics information with the same flow identification information, the processor merges the flow statistics information meeting a preset interval duration merging condition based on the first packet timestamp and the last packet timestamp, and determines cycle information of a flow based on the merged flow statistics information; further, the processor can determine flow characteristic information of a downstream port of a spine node based on the cycle information of the flow, and advertise the flow characteristic information of the downstream port of the spine node to leaf nodes, so that the leaf nodes perform upstream data flow scheduling based on the flow characteristic information of the downstream port of the spine node, thereby reducing the probability of traffic congestion in AI large model networks.

## BRIEF DESCRIPTION OF DRAWINGS

FIG. 1 is a flow diagram illustrating a method for traffic forwarding provided by an embodiment of the present disclosure.
FIG. 2 is a schematic diagram of a specific application scenario provided by an embodiment of the present disclosure.
FIG. 3 is a structural diagram illustrating a Spine node provided by an embodiment of the present disclosure.
FIG. 4 is a schematic diagram of a traffic rate-time curve provided by an embodiment of the present disclosure.
FIG. 5 is a structural diagram illustrating an apparatus for traffic forwarding provided by an embodiment of the present disclosure.

## DETAILED DESCRIPTION

To enable those skilled in the art to better understand the technical solutions in the embodiments of the present disclosure and make the aforementioned objectives, features, and advantages of the embodiments of the present disclosure more apparent and easy to understand, further detailed descriptions of the technical solutions in the embodiments of the present disclosure are provided below in conjunction with the accompanying drawings.

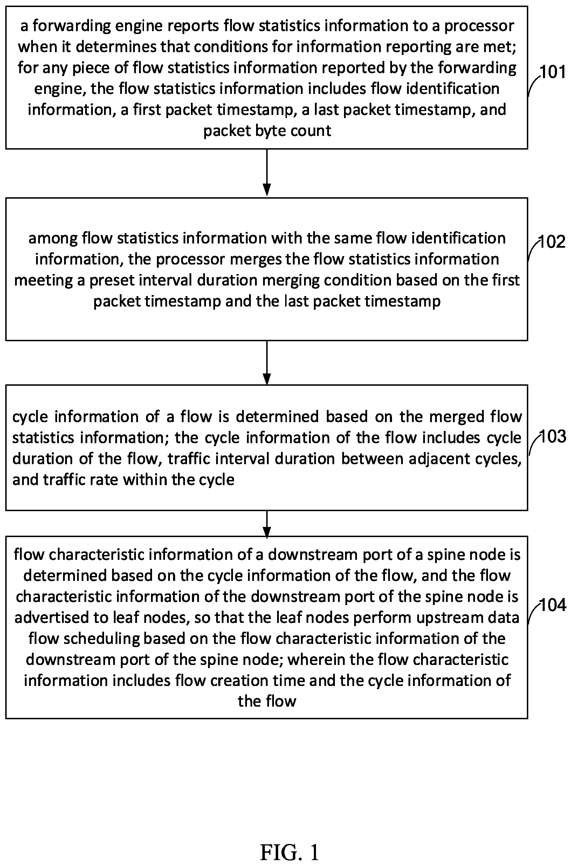

Please refer to Fig. 1, which is a schematic flow diagram of a traffic forwarding method provided by an embodiment of the present disclosure. This traffic forwarding method can be applied to Spine nodes in an AI large model network based on a Leaf-Spine network architecture. As shown in Fig. 1, the traffic forwarding method may include the following processes:

In Process 101, a forwarding engine reports flow statistics information to a processor when it determines that conditions for information reporting are met; for any piece of flow statistics information reported by the forwarding engine, the flow statistics information includes flow identification information, a first packet timestamp, a last packet timestamp, and packet byte count.

In an embodiment of the present disclosure, the forwarding engine of the Spine node can perform traffic information statistics based on the forwarded traffic.

When the forwarding engine determines that conditions for information reporting are met, it may report flow statistics information to a processor, such as a Center Process Unit (CPU).

For any piece of flow statistics information, it may include but is not limited to flow identification information, a first packet timestamp, a last packet timestamp, and packet byte count.

For a flow, when flow statistics information is reported for the first time, the first packet timestamp is the timestamp of the first packet received for that flow; the last packet timestamp is the timestamp of the last packet received before reporting the flow statistics information.

When flow statistics information is reported non-initially, the first packet timestamp is the timestamp of the first packet received for that flow after the previous flow statistics information report; the last packet timestamp is the timestamp of the last packet received before reporting the flow statistics information.

In some examples, the flow identification information may include five-tuple information, such as source IP address, destination IP address, communication protocol, source port number, and destination port number, or the flow identification information may include five-tuple information and a Queue Pair (QP).

In Process 102, among flow statistics information with the same flow identification information, the processor merges the flow statistics information meeting a preset interval duration merging condition based on the first packet timestamp and the last packet timestamp.

In an embodiment of the present disclosure, for flow statistics information reported by the forwarding engine, the processor can merge flow statistics information for the same flow meeting a preset interval duration merging condition based on timestamps in the flow statistics information.

For example, multiple pieces of flow statistics information in the same cycle can be identified based on timestamps in flow statistics information with the same flow identification information and merged.

In Process 103, cycle information of a flow is determined based on the merged flow statistics information; the cycle information of the flow includes cycle duration of the flow, traffic interval duration between adjacent cycles, and traffic rate within the cycle.

In an embodiment of the present disclosure, cycle information of the flow can be determined based on the merged flow statistics information, such as cycle duration of the flow, traffic interval duration between adjacent cycles, and traffic rate within the cycle.

In some examples, the cycle duration of the flow may include traffic sending duration and idle duration (which is typically the computation duration of a computing node).

That is, traffic sending by computing nodes usually has periodic patterns, and generally for one cycle, a portion of the time is used for related computations, and a portion of the time is used for traffic sending.

The traffic interval duration between adjacent cycles corresponds to the idle duration in one cycle mentioned above.

The traffic rate within the cycle can be determined based on the duration of packet sending within the cycle and the packet byte count within the cycle.

Table 1

| Key Value Of Flow Table | Result Of Flow Table |
|---|---|
| Source IP address (SIP) | Start timestamp = UTC/GMT (First Packet Timestamp) |
| Destination IP address(DIP) | Last timestamp= UTC/GMT (Last Packet Timestamp) |
| IP PROTOCAL | Packet Bytes (Packet Byte Count) |
| Source L4port | |
| Destination L4port | |
| QP | |

As shown in Table 1, the flow statistics information uses a five-tuple + QP as flow identification information, and can record information such as the first packet timestamp, the last packet timestamp, the number of packets, and the packet byte count (i.e., the number of packet bytes).

It should be noted that in practical applications, for flow statistics information, the flow identification information it includes can also include Virtual Local Area Network (VLAN) information, and/or Virtual Network Identifier (VNI) information, etc.; the flow information carried in flow statistics information can also include the number of packets, delay-related information, such as one or more of maximum delay, minimum delay, average delay, jitter, and other delay-related information.

In Process 104, flow characteristic information of a downstream port of a spine node is determined based on the cycle information of the flow, and the flow characteristic information of the downstream port of the spine node is advertised to leaf nodes, so that the leaf nodes perform upstream data flow scheduling based on the flow characteristic information of the downstream port of the spine node; wherein, the flow characteristic information includes flow creation time and the cycle information of the flow.

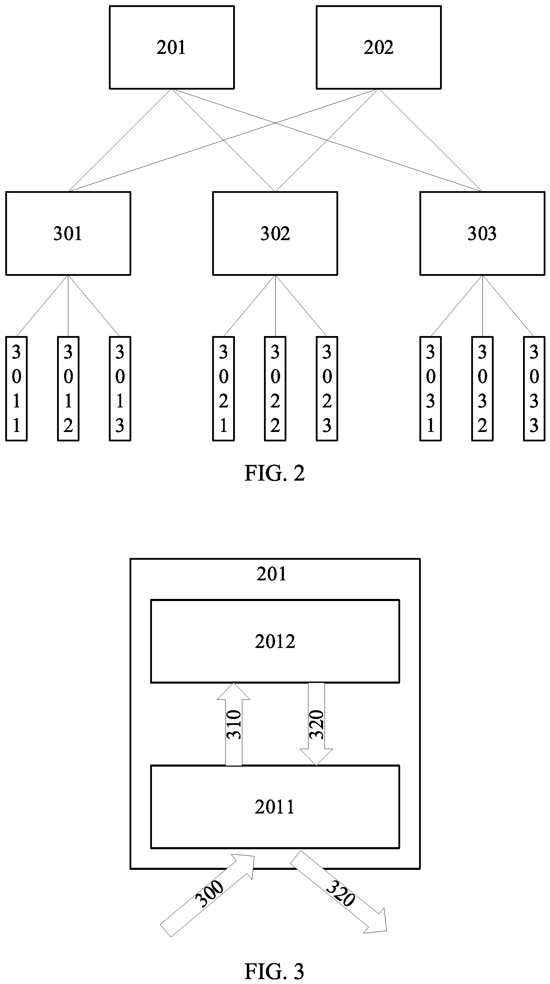

Please refer to FIG. 2, which is a schematic diagram of a specific application scenario provided by an embodiment of the present disclosure. As shown in FIG.2, in this application scenario, Spine nodes 201 to 202 are each connected to Leaf nodes 301 to 303 through different ports (not shown in FIG. 2), and the Leaf nodes 301 to 303 are each connected to the Spine nodes 201 to 202 through different ports (not shown in FIG. 2). Each Leaf node is connected to multiple computing power nodes through different ports. Take the Spine node 201 as an example, the Spine node 201 includes a forwarding engine 2011 and a CPU 2012.

For any flow, the forwarding engine 2011 may report flow statistics information 310 to the CPU 2012 when a continuous duration of the flow reaches a preset reporting cycle duration (which can be set based on actual needs, such as 100ms), or when the interruption duration of the flow exceeds a preset interruption duration threshold (which can be set based on actual needs, such as 20ms). A schematic diagram is shown in Fig. 3.

For a flow, when the time difference between the timestamps of adjacent packets of the flow does not exceed the preset interruption duration threshold, it can be determined that the flow is continuous, and thus its continuous duration can be recorded; when the absolute value of the difference between the time when the last packet of the flow was received and the current time exceeds the preset interruption duration threshold, it can be determined that the flow is interrupted.

When the CPU 2012 receives flow statistics information 301 reported by the forwarding engine 2011, it can query the flow statistics information history record to determine if there is a flow statistics information history record with the same flow identification information as that carried in the flow statistics information 301.

In the case where no flow statistics information history record with the same flow identification information as that carried in the flow statistics information 301 is found, a new flow statistics information record can be generated based on the flow statistics information 301 (after the new flow statistics information record is generated, it also becomes part of the flow statistics information history).

Exemplarily, the storage format of the flow statistics information history record can be as shown in Table 2:

Table2

| key values of flow table | Result of flow table |
|---|---|
| Source IP address (SIP) | Start timestamp[]= UTC/GMT (First Packet Timestamp) |
| Destination IP address (DIP) | Last timestamp[]= UTC/GMT (Last Packet Timestamp) |
| IP PROTOCAL | Packet Bytes[] (Packet Byte Count) |
| Source L4port | |
| Destination L4port | |
| QP | |

Based on Table 2, the flow identification information in the flow statistics information history record is consistent with the flow identification information in the flow statistics information. Multiple flow statistics information history records can be stored in the form of arrays in Table 2, with each flow statistics information history record corresponding to one cycle of a flow.

For any flow statistics information history record, it can include parameter information such as the first packet timestamp, the last packet timestamp, and the packet byte count. Elements with the same index in each parameter information array correspond to the same flow statistics information history record.

For example, assuming Start timestamp[] is Start timestamp [T_S1, T_S2, T_S3] and Last timestamp[] is Last timestamp [T_L1, T_L2, T_L3], then T_S1 and T_L1 are the first packet timestamp and the last packet timestamp carried in the same flow statistics information history record.

When a flow statistics information history record with the same flow identification information as that carried in the flow statistics information 301 is found, the CPU 2012 can compare the time difference between the first packet timestamp carried in the currently received flow statistics information and the last packet timestamp carried in the target flow statistics information history record.

The target flow statistics information history record refers to the latest flow statistics information history record with the same flow identification information as that carried in the flow statistics information 301.

The latest flow statistics information history record mentioned above refers to the flow statistics information history record with the smallest time difference between the carried last packet timestamp and the first packet timestamp carried in the currently received flow statistics information.

The CPU 2012 can merge the currently received flow statistics information with the target flow statistics information history record when the time difference is less than a preset time difference threshold (which can be set based on actual needs, such as 2ms or 5ms).

For example, assuming the first packet timestamp in the currently received flow statistics information is CurRecord.startTime, and the last packet timestamp carried in the target flow statistics information history record is PreRecord.lastTime, the currently received flow statistics information can be merged with the target flow statistics information history record when the time difference between CurRecord.startTime and PreRecord.lastTime is less than the preset time difference threshold.

When merging the currently received flow statistics information with the target flow statistics information history record, the last packet timestamp in the merged target flow statistics information history record is the last packet timestamp in the currently received flow statistics information, and the packet byte count is the original packet byte count plus the packet byte count carried in the currently received flow statistics information.

Exemplarily, the merging process can be represented as follows:

$$PreReCord.lastTime=CurRecord.\ lastTime$$

$$PreReCord.byte+=CurRecord.byte$$

In this process, PreRecord.lastTime becomes the last packet timestamp in the merged target flow statistics information history record, and CurRecord.lastTime is the last packet timestamp in the currently received flow statistics information. "PreRecord.byte += CurRecord.byte" indicates that the packet byte count in the merged target flow statistics information history record is the original packet byte count plus the packet byte count carried in the currently received flow statistics information (CurRecord.byte).

When the time difference is greater than or equal to the preset time difference threshold, a new flow statistics information record is generated based on the currently received flow statistics information.

This new flow statistics information record includes flow identification information, a first packet timestamp, a last packet timestamp, and packet byte count that are consistent with the corresponding information in the currently received flow statistics information.

Exemplarily, for any flow, a maximum number of flow statistics information history records for that flow stored by the CPU 2012 can be preset. When a new flow statistics information record needs to be generated and the current number of flow statistics information history records reaches the maximum, older flow statistics information history records can be overwritten.

In this embodiment, the CPU 2012 can determine cycle information of a flow based on flow statistics information history records.

Exemplarily, for flow statistics information history records with the same flow identification information, the flow statistics information history records can be sorted based on the first packet timestamps (or last packet timestamps) carried in flow statistics information history records to identify adjacent flow statistics information history records.

The CPU 2012 can determine the cycle duration of a flow based on the first packet timestamps of adjacent flow statistics information history records with the same flow identification information.

It can determine the traffic interval duration between adjacent cycles based on a last packet timestamp of a previous flow statistics information history record and a first packet timestamp of a subsequent flow statistics information history record among the adjacent flow statistics information history records.

It can determine the traffic rate within a cycle based on the first packet timestamp, the last packet timestamp, and the packet byte count in the same flow statistics information history record.

For example, single-cycle information statistics is taken as an example.

For a flow, assuming the first packet timestamps of two consecutive flow statistics information history records are T_S1 and T_S2, respectively, the time difference between T_S1 and T_S2 corresponds to the cycle duration of the flow.

Assuming the first packet timestamps of two consecutive flow statistics information history records are T_S1 and T_S2, and the last packet timestamps are T_L1 and T_L2, respectively, the time difference between T_L1 and T_S2 corresponds to the traffic interval duration between the adjacent cycles of the flow.

Assuming a flow statistics information history record includes a first packet timestamp T_S1, a last packet timestamp T_L1, and a packet byte count Byte1, the ratio of Byte1 to the time difference corresponding to T_S1 and T_L1 represents the traffic rate within the cycle.

In some examples, to improve the accuracy of determining the cycle duration of a flow, for any flow, the flow's cycle duration can be determined based on an average of time differences between the first timestamps in the adjacent flow statistics information history records within a preset number of flow statistics information history records when the number of flow statistics information history records reaches the first preset number (which can be set based on actual needs, such as 5 records).

For example, assuming that the five consecutive flow statistical information history records are R1 to R5 in sequence, the time difference $\Delta T12$ between the first packet timestamps in R1 and R2, the time difference $\Delta T23$ between the first packet timestamps in R2 and R3, ..., and the time difference $\Delta T45$ between the first packet timestamps in R4 and R5 can be determined respectively, and $(\Delta T12 + \Delta T23 + \Delta T34 + \Delta T45) / 4$ may be determined as the cycle duration of the flow.

It should be noted that in the embodiment of the present disclosure, the cycle duration of the flow may be updated based on requirements.

For instance, for a flow, after the cycle duration of the flow is determined in the aforementioned manner, the cycle duration may be determined and updated based on the latest flow statistical information history record based on the aforementioned manner each time k ($k \geq 1$) new flow statistical information history records are added for the flow.

Similarly, analogous to the determination of the cycle duration mentioned above, when determining the traffic interval duration between adjacent cycles, the traffic interval duration between adjacent cycles may also be determined based on the timestamp information in adjacent flow statistical information history records within a preset number (which can be referred to as a second preset number and set based on actual requirements, such as five records) of the flow statistical information history records of the flow when the number of the flow statistical information history records of the flow reaches the preset number.

Similarly, analogous to the determination of the cycle duration mentioned above, when determining the traffic rate within a cycle, the traffic rate within the cycle may also be determined based on the timestamp information and the packet byte count in adjacent flow statistical information history records, excluding the latest flow statistical information history record, within a preset number (which can be referred to as a third preset number and set based on actual requirements, such as five records) of the flow statistical information history records of the flow, when the number of flow statistical information history records of the flow reaches the preset number.

It should be noted that since the determination of the traffic rate within a cycle requires the use of the first packet timestamp and the last packet timestamp within the cycle, and based on the generation method of the aforementioned flow statistical information history records, the latest flow statistical information history record may not cover a complete cycle. Therefore, when determining the traffic rate within a cycle based on the flow statistical information history records, the determination can be made based on non-latest flow statistical information history records.

Exemplarily, for any flow of any downstream port, after the cycle information of the flow is determined in the aforementioned manner, an active duration within the cycle of the flow can be determined based on the cycle duration of the flow and the traffic interval duration between adjacent cycles.

For example, the difference between the cycle duration of the flow and the traffic interval duration between adjacent cycles may be determined as the active duration within the cycle of the flow.

For any flow of any downstream port, a traffic rate-time curve of the flow can be determined based on the active duration within the cycle and the traffic rate within the cycle of the flow.

For a flow, in the traffic rate-time curve of the flow, with the creation time of the flow as the base time, the traffic rate during the active duration within the cycle is the traffic rate within the cycle, and the traffic rate is 0 for the rest of the time outside the active duration within the cycle.

For a flow, the flow creation time can be the time corresponding to the timestamp of the first packet of the flow.

For example, for a flow with a constant traffic rate, its traffic rate-time curve function can be as follows:

$$f(t) = ((t - \text{baseTime}) \% \text{periodTime}) < \text{activeTime ? ratex} : 0$$

Where t is the current time, baseTime is the base time of the flow, periodTime is the cycle duration of the flow, activeTime is the active duration within the cycle of the flow; "%" denotes the modulo operation; and ratex is the traffic rate within the cycle.

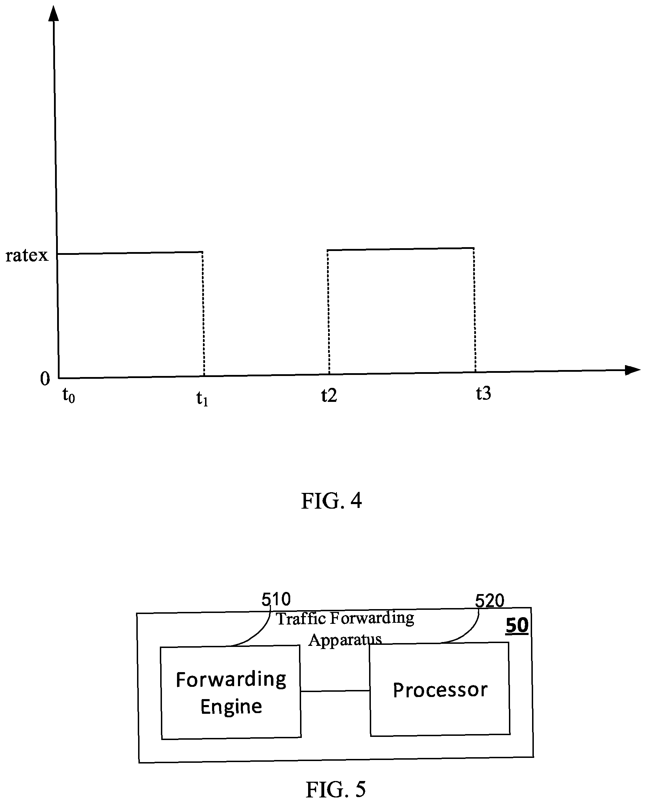

The traffic rate-time curve corresponding to the aforementioned traffic rate-time curve function can be seen in Fig. 4.

As shown in Fig. 4, the horizontal axis represents the time axis, and the vertical axis represents the traffic rate. t0 represents the base time of the flow, t0~t1 and t2~t3 represent the active durations within the flow cycle, and t1~t2 represents the interval duration between adjacent cycles of the flow.

For downstream port, when the traffic rate-time curve of each flow of the downstream port has been determined in the aforementioned manner, a single port traffic profile may be obtained through multi-flow superposition.

$$F(t) = \sum_{i=1}^{n} f_i(t)$$

Wherein, n is the total number of downstream flows of a single downstream port, and fi(t) is the traffic rate-time curve function of the ith flow of the downstream port.

In this embodiment, when the CPU 2012 obtains the traffic profile 320 of the downstream port in the aforementioned manner, it may publish the traffic profile 320 of the downstream port to the Leaf node through the forwarding engine 2011, as illustrated in Fig. 3.

When the Leaf node receives the traffic profile of the downstream port sent by the Spine node, it may perform upstream data flow scheduling based on the traffic profile of the downstream port of the Spine node. For example, it may preferentially select a downstream port that is idle or has a lower traffic rate of existing data flows for use.

Furthermore, in cases where the flow statistics information also include delay information, the traffic profile of the downstream port may also include delay information.

Accordingly, when performing upstream data flow scheduling, the Leaf node may also select the downstream port of the Spine node based on the delay information. For example, it may preferentially select a downstream port with less delay (such as the minimum maximum delay or the minimum average delay) or the smallest jitter for use.

In one example, when performing upstream data flow scheduling, the Leaf node may preferentially select a downstream port based on the traffic rate, prioritizing idle downstream ports or those with lower traffic rates of existing data flows. For multiple downstream ports with the same traffic rate or a traffic rate difference not exceeding a preset threshold, the selection may be based on delay.

Please refer to Fig. 5, which is a schematic diagram of the structure of a traffic forwarding apparatus provided in an embodiment of the present disclosure. The traffic forwarding apparatus 50 can be deployed in the spine node of the AI large model network based on the leaf-spine network architecture mentioned above. As shown in Fig. 5, the traffic forwarding apparatus may include: a forwarding engine 510 and a processor 520.

In some examples, the forwarding engine 510 may be implemented by hardware, for instance by hardware circuitry of an application specific integrated chip (ASIC), field programmable gate array (FPGA), or by a processor executing machine readable instructions. When implemented by an ASIC or FPGA, the forwarding engine 510 may be implemented by separate hardware devices or as separate modules of a single hardware device.

The forwarding engine 510 is configured to report flow statistics information to the processor 520 when it is determined that information reporting conditions are met. For any piece of flow statistics information reported by the forwarding engine, the flow statistics information includes flow identification information, a first packet timestamp, a last packet timestamp, and t packet byte count.

The processor 520 is configured to, among flow statistics information with the same flow identification information, merge flow statistics information meeting a preset interval duration merging condition based on the first packet timestamp and the last packet timestamp.

The processor 520 is further configured to determine cycle information of a flow based on the merged flow statistics information. The cycle information of the flow includes cycle duration of the flow, traffic interval duration between adjacent cycles, and traffic rate within the cycle.

The processor 520 is also configured to determine flow characteristic information of a downstream port of a spine node based on the cycle information of the flow, and to publish the flow characteristic information of the downstream port of the spine node to leaf nodes, so that the leaf nodes can perform upstream data flow scheduling based on the flow characteristic information of the downstream port of the spine node. The flow characteristic information includes the flow creation time and the cycle information of the flow.

In some embodiments, the information reporting condition being met includes:

a continuous duration of the same flow reaching a preset reporting cycle duration; or,
an interruption duration of the same flow exceeding a preset interruption duration threshold.

In some embodiments, the process of the processor 520 merging flow statistics information meeting a preset interval duration merging condition based on the first packet timestamp and the last packet timestamp includes:

for currently received flow statistics information, when it is determined that there is a flow statistics information history record with identical flow identification information of the currently received flow statistics information, determining a time difference between a first packet timestamp carried in the currently received flow statistics and a last packet timestamp carried in the target historical record of flow statistics; wherein the target flow statistics information history record is a latest flow statistics information history record with identical flow identification information;
in response to a determination that the time difference is less than a preset time difference threshold, merging the currently received flow statistics information with the target flow statistics information history record.
in response to a determination that the time difference is greater than or equal to the preset time difference threshold, generating a new flow statistics information record based on the currently received flow statistics information.

In some embodiments, the process of the processor 520 determining cycle information of a flow based on the merged flow statistics information includes:

determining the cycle duration of the flow based on the first packet timestamps in adjacent flow statistics information history records with identical flow identification information;
determining the flow interval duration between adjacent cycles based on a last packet timestamp in a previous flow statistics information history record and a first packet timestamp in a subsequent flow statistics information history record among the adjacent flow statistics information history record.
determining traffic rate within the cycle based on the first packet timestamp, the last packet timestamp, and the packet byte count in the same flow statistics information history record.

In some embodiments, the process of the processor 520 determining flow characteristic information of a downstream port of a spine node based on the cycle information of the flow includes:

] for any flow of any downstream port, determining an active duration within the cycle of the flow based on the cycle duration of the flow and the traffic interval duration between adjacent cycles of the flow;

determining a traffic rate-time curve of the flow based on the active duration within the cycle and the traffic rate within the cycle of the flow;

determining the flow characteristic information of the downstream port based on the traffic rate-time curves of all flows of the downstream port.

The realization processes of the functions and roles of each unit in the aforementioned apparatus are specifically detailed in the realization processes of the corresponding processes in the aforementioned method, and will not be repeated here.

For the apparatus embodiment, since it basically corresponds to the method embodiment, refer to the partial description of the method embodiment for related information.

**Claims**

1. A traffic forwarding method, comprising:

   (101) reporting, by a forwarding engine, flow statistics information to a processor in response to a determination that an information reporting condition is met; wherein, for any piece of flow statistics information reported by the forwarding engine, the flow statistics information includes flow identification information, a first packet timestamp, a last packet timestamp, and packet byte count;

   (102) among flow statistics information with the same flow identification information, merging, by the processor, the flow statistics information meeting a preset interval duration merging condition based on the first packet timestamp and the last packet timestamp;

   (103) determining, by the processor, cycle information of a flow based on the merged flow statistics information; wherein the cycle information of the flow includes cycle duration of the flow, traffic interval duration between adjacent cycles, and traffic rate within the cycle;

   (104) determining, by the processor, flow characteristic information of a downstream port of a spine node based on the cycle information of the flow, and advertising the flow characteristic information of the downstream port of the spine node to leaf nodes, so that the leaf nodes perform upstream data flow scheduling based on the flow characteristic information of the downstream port of the spine node; wherein, the flow characteristic information includes flow creation time and the cycle information of the flow.

2. The method of claim 1, wherein the information reporting condition being met, comprises:

   a continuous duration of the same flow reaching a preset reporting cycle duration; or,
   an interruption duration of the same flow exceeding a preset interruption duration threshold.

3. The method of claim 1, wherein the merging, by the processor, the flow statistics information meeting a preset interval duration merging condition based on the first packet timestamp and the last packet timestamp, comprises:

   for currently received flow statistics information, determining, by the processor, a time difference between a first packet timestamp carried in the currently received flow statistics information and a last packet timestamp carried in a target flow statistics information history record in response to a determination that there is a flow statistics information history record with the same flow identification information of the currently received flow statistics information; wherein, the target flow statistics information history record is a latest flow statistics information history record with the same flow identification information;

   merging, by the processor, the currently received flow statistics information and the target flow statistics information history record in response to a determination that the time difference is less than a preset time difference threshold;

   generating, by the processor, a new flow statistics information record based on the currently received flow statistics information in response to a determination that the time difference is greater than or equal to the preset time difference threshold.

4. The method of claim 1, wherein determining, by the processor, cycle information of a flow based on the merged flow statistics information comprises:

determining, by the processor, cycle duration of the flow based on first packet timestamps in adjacent flow statistics information history records with the same flow identification information;

determining, by the processor, traffic interval duration between adjacent cycles based on a last packet timestamp in a previous flow statistics information history record and a first packet timestamp in a subsequent flow statistics information history record among the adjacent flow statistics information history records;

determining, by the processor, traffic rate within the cycle based on a first packet timestamp, a last packet timestamp, and packet byte count in the same flow statistics information history record.

5. The method of claim 1, wherein determining, by the processor, flow characteristic information of a downstream port of a spine node based on the cycle information of the flow, comprises:

for any flow of any downstream port, determining , by the processor, an active duration within the cycle of the flow based on the cycle duration of the flow and the traffic interval duration between adjacent cycles;

determining, by the processor, a traffic rate-time curve of the flow based on the active duration within the cycle of the flow and the traffic rate within the cycle;

determining, by the processor, flow characteristic information of the downstream port based on traffic rate-time curves of each flow of the downstream port.

6. A traffic forwarding apparatus (50), comprises a processor (520) and a forwarding engine (510); wherein:

the forwarding engine is to report flow statistics information to the processor in response to a determination that an information reporting condition is met; wherein, for any piece of flow statistics information reported by the forwarding engine, the flow statistics information includes flow identification information, a first packet timestamp, a last packet timestamp, and packet byte count;

the processor is to, among flow statistics information with the same flow identification information, merge the flow statistics information meeting a preset interval duration merging condition based on the first packet timestamp and the last packet timestamp;

the processor is further to determine cycle information of a flow based on the merged flow statistics information; wherein the cycle information of the flow includes cycle duration of the flow, traffic interval duration between adjacent cycles, and traffic rate within the cycle;

the processor is further to determine flow characteristic information of a downstream port of a spine node based on the cycle information of the flow, and advertise the flow characteristic information of the downstream port of the spine node to leaf nodes, so that the leaf nodes perform upstream data flow scheduling based on the flow characteristic information of the downstream port of the spine node; wherein, the flow characteristic information includes flow creation time and the cycle information of the flow.

7. The apparatus of claim 6, wherein the information reporting condition being met comprises:

a continuous duration of the same flow reaching a preset reporting cycle duration; or,

an interruption duration of the same flow exceeding a preset interruption duration threshold.

8. The apparatus of claim 6, wherein the processor is to, among flow statistics information with the same flow identification information, merge the flow statistics information meeting a preset interval duration merging condition based on the first packet timestamp and the last packet timestamp, comprising:

for currently received flow statistics information, determining, by the processor, a time difference between a first packet timestamp carried in the currently received flow statistics information and a last packet timestamp carried in a target flow statistics information history record in response to a determination that a flow statistics information history record with the same flow identification information of the currently received flow statistics information; wherein, the target flow statistics information history record is a latest flow statistics information history record with the same flow identification information;

merging, by the processor, the currently received flow statistics information and the target flow statistics information history record in response to a determination that the time difference is less than a preset time difference threshold;

generating, by the processor, a new flow statistics information record based on the currently received flow statistics information in response to a determination that the time difference is greater than or equal to the preset time difference threshold.

9.  The apparatus of claim 6, wherein the processor is further to determine cycle information of a flow based on the merged flow statistics information, comprising:

    determining, by the processor, cycle duration of the flow based on first packet timestamps in adjacent flow statistics information history records with the same flow identification information;
    determining, by the processor, traffic interval duration between adjacent cycles based on a last packet timestamp in a previous flow statistics information history record and a first packet timestamp in a subsequent flow statistics information history record among the adjacent flow statistics information history records;
    determining, by the processor, traffic rate within the cycle based on a first packet timestamp, a last packet timestamp, and packet byte count in the same flow statistics information history record.

10. The apparatus of claim 6, wherein the processor is further to determine flow characteristic information of a downstream port of a spine node based on the cycle information of the flow, comprising:

    for any flow of any downstream port, determining, by the processor, an active duration within the cycle of the flow based on the cycle duration of the flow and the traffic interval duration between adjacent cycles;
    determining, by the processor, a traffic rate-time curve of the flow based on the active duration within the cycle of the flow and the traffic rate within the cycle;
    determining, by the processor, flow characteristic information of the downstream port based on traffic rate-time curves of each flow of the downstream port.

a forwarding engine reports flow statistics information to a processor when it determines that conditions for information reporting are met; for any piece of flow statistics information reported by the forwarding engine, the flow statistics information includes flow identification information, a first packet timestamp, a last packet timestamp, and packet byte count /101

among flow statistics information with the same flow identification information, the processor merges the flow statistics information meeting a preset interval duration merging condition based on the first packet timestamp and the last packet timestamp /102

cycle information of a flow is determined based on the merged flow statistics information; the cycle information of the flow includes cycle duration of the flow, traffic interval duration between adjacent cycles, and traffic rate within the cycle /103

flow characteristic information of a downstream port of a spine node is determined based on the cycle information of the flow, and the flow characteristic information of the downstream port of the spine node is advertised to leaf nodes, so that the leaf nodes perform upstream data flow scheduling based on the flow characteristic information of the downstream port of the spine node; wherein the flow characteristic information includes flow creation time and the cycle information of the flow /104

FIG. 1

FIG. 2

FIG. 3

FIG. 4

FIG. 5

Europäisches
Patentamt

European
Patent Office

Office européen
des brevets

# EUROPEAN SEARCH REPORT

**Application Number**

EP 24 21 6556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/137300 A1 (RAI SMITA [US] ET AL) 25 April 2024 (2024-04-25) * paragraphs [0022] - [0045]; claims 1-39 * | 1-10 | INV. H04L45/02 H04L43/026 H04L45/00 H04L47/24 |
| A | WO 2023/134574 A1 (HUAWEI TECH CO LTD [CN]; UNIV BEIJING [CN]) 20 July 2023 (2023-07-20) * the whole document * | 1-10 | H04L47/2441 H04L47/2483 |

| **TECHNICAL FIELDS SEARCHED (IPC)** |
|---|
| H04L |

The present search report has been drawn up for all claims

| Place of search | Date of completion of the search | Examiner |
|---|---|---|
| The Hague | 28 April 2025 | Boureanu, Vlad |

EPO FORM 1503 03.82 (P04C01)

**EP 4 672 703 A1**

## ANNEX TO THE EUROPEAN SEARCH REPORT
## ON EUROPEAN PATENT APPLICATION NO.

EP 24 21 6556

28-04-2025

| Patent document cited in search report | Publication date | Patent family member(s) | | Publication date |
|---|---|---|---|---|
| US 2024137300 A1 | 25-04-2024 | US | 2018205624 A1 | 19-07-2018 |
| | | US | 2019386905 A1 | 19-12-2019 |
| | | US | 2021281502 A1 | 09-09-2021 |
| | | US | 2024137300 A1 | 25-04-2024 |
| WO 2023134574 A1 | 20-07-2023 | CN | 116471194 A | 21-07-2023 |
| | | WO | 2023134574 A1 | 20-07-2023 |

EPO FORM P0459

For more details about this annex : see Official Journal of the European Patent Office, No. 12/82